Europäisches Patentamt

European Patent Office

Office européen des brevets

(19)

(11) EP 0 790 404 B1

(12) EUROPEAN PATENT SPECIFICATION

(45) Date of publication and mention
of the grant of the patent:
20.08.2003 Bulletin 2003/34

(51) Int Cl.⁷: F02M 61/16, F02M 51/08

(21) Application number: 97102258.7

(22) Date of filing: 12.02.1997

(54) **In-cylinder fuel injection device and internal combustion engine mounting the same**

Vorrichtung zur direkten Kraftstoffeinspritzung und mit dieser Vorrichtung ausgestatteter
Verbrennungsmotor

Dispositif d'injection directe de combustible et moteur à combustion interne équipé du dit dispositif

(84) Designated Contracting States:
DE GB IT

(30) Priority: 14.02.1996 JP 2645396

(43) Date of publication of application:
20.08.1997 Bulletin 1997/34

(73) Proprietors:
• Hitachi, Ltd.
Chiyoda-ku, Tokyo 101 (JP)
• Hitachi Car Engineering Co., Ltd.
Hitachinaka-shi, Ibaraki-ken 312 (JP)

(72) Inventors:
• Okamoto, Yoshio
Higashiibaraki-gun, Ibaraki 319-01 (JP)
• Ohsuga, Minoru
Hitachinaka-shi, Ibaraki 312 (JP)
• Ishikawa, Tohru
Kitaibaraki-shi, Ibaraki 319-17 (JP)
• Souma, Masahiro
Hitachi-shi, Ibaraki 316 (JP)

(74) Representative: Beetz & Partner Patentanwälte
Steinsdorfstrasse 10
80538 München (DE)

(56) References cited:
EP-A- 0 151 793    WO-A-88/03226
BE-A- 531 495     CH-A- 290 996
DE-A- 1 526 709    DE-A- 3 623 221
DE-A- 3 735 526    GB-A- 251 121
GB-A- 2 069 045    US-A- 5 307 997
US-A- 5 360 166

• PATENT ABSTRACTS OF JAPAN vol. 007, no.
165 (M-230), 20 July 1983 & JP 58 072671 A
(HITACHI ZOSEN KK), 30 April 1983,

EP 0 790 404 B1

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

**Description**

The invention relates to a fuel injection device of electromagnetic type for directly injecting fuel into a combustion chamber, according to the first part of claim 1. Such a fuel injection device is disclosed in the JP-A-58 072 671.

In a gasoline engine of an in-cylinder fuel injection type , since a spark plug is provided at the top of the combustion chamber as an ignition means, the arrangement of the electromagnetic fuel injection valve is limited. That is, since temperature of a position near an exhaust valve becomes high, the fuel injection valve cannot be placed there. In the other hand, since the air-intake valve side is less affected by the combustion gas though there is an intake passage there, it is proposed that the electromagnetic fuel injection valve is installed near the air-intake valve.

Even if the electromagnetic fuel injection valve is installed near the air-intake valve in the cylinder head, temperature of the cylinder head of the gasoline engine becomes 250 to 300 °C during operation of the engine. Therefore, the front end portion of the electromagnetic fuel injection valve is also heated up to near the same temperature. Under such a temperature condition, it is accelerated to produce deposits of carbonization-growing materials of the injected gasoline and a mixture of engine lubricant and the gasoline. Most of the deposits are amorphous flakes. However, when the temperature is increased, the carbonization is further progressed to form soot of a grain structure having a size of several tens nano-meters. The deposits and the soot attaches and accumulates onto the wall surface of the combustion chamber and the valve front portion of the electromagnetic fuel injection valve.

In order to solve the problem of accumulation of the deposits and the soot, the JP-A- 3-225068 proposes that an externally opening valve is employed and ring-shaped projections projecting outward are provided in the peripheral portion of the front end of the valve head and in the peripheral portion of an opening of the fuel injection nozzle of the valve body. By doing so, appropriate fuel injection is performed by that the projections concentratively receive heat from the engine compared to the other parts and the temperature of the projection is locally increased to suppress formation of deposits due to the attached fuel drops.

The JP-A- 6-147022 discloses a fuel injection device for directly injecting fuel into a combustion chamber in which exhaust gas is recirculated in order to decrease $NO_x$ exhaust.

In general, the deposits and the soot attached onto the wall surface of the combustion chamber are not considered as a problem since they increase the thermal insulating efficiency to improve the combustion efficiency. However, when the deposits are attached and accumulated at the valve front portion of the electromagnetic fuel injection valve, particularly near the fuel injection nozzle and at an inside portion of the fuel injection nozzle provided at the front end portion of the electromagnetic fuel injection valve, the injecting direction and the fuel spray shape are changed and the fuel mist particle size becomes large. Therefore, the engine is exerted not only a bad influence on combustion, but the fuel injection nozzle is choked and the injection resistance is increased. As the result, a desired amount of fuel injection cannot be injected. In a worst case, it is worried that fuel cannot be injected and consequently the cannot be operated.

In the case of the JP-A- 3-225068 described above, it is intended that a heat spot, which is locally increased to a high temperature, is formed to decrease generation of the deposits and the soot. However, since the heat capacity of the heat spot is small, the temperature is rapidly decreased at intake stroke and deposits are generated at that time, and the deposits are carbonized in the next combustion stroke. Therefore, there is possibility that the desired effect cannot always be obtained.

In the case of the JP-A-. 6-147022 described above, although Nox exhaust is reduced, the deposits and the soot attached near the injection nozzle of the fuel injection valve is not sufficiently considered and there is possibility to cause degradation in performance of the fuel injection valve.

JP-A-58072671 discloses a fuel injection valve with an internal heater disposed in a channel inside the main body of the injection valve. The heater is used to heat the surface of the nozzle tip to temperatures above 300 °C in order to reduce the amount of sticking fuel particles in the surface of the nozzle tip by enhancing evaporation.

(1) When a spread angle of fuel spray particles injected from a fuel injection valve is narrow, penetrating force of the fuel spray, that is, kinetic energy in the injecting direction becomes large. However, when the fuel spray particles reach an inner wall surface of the cylinder facing the fuel spray, the fuel spray particles are changed in a form of a film. The fuel film takes a long time to be evaporated, and a part of the fuel is not completely evaporated and remains to form a mixture having a dense fuel concentration, and cause red-flame burning to cause a lot of soot.

(2) In the other hand, when the spread angle of fuel spray particles is sufficiently wide, penetrating force of the fuel spray becomes weak. However, the fuel spray particles hit on a dish-plate portion of the air-intake valve projecting into the cylinder and a part of the fuel spray particles hit the inner wall surface of the cylinder head passing through the dish-plate portion, and becomes in a form of a film-shape as the same as described in the item (1) above. The fuel spray particles attached onto the disk-plate portion of the air-intake valve are re-atomized by the intake air flow flowing into the cylinder to moderate the bad effect on combustion. The fuel attached onto the cylinder head burns in red-flame since it takes a long time to be evaporated as the same as described in the item (1) above.

(3) A spark plug is arranged near the central portion of the cylinder head, and when the fuel attaches to the spark plug, normal generation of spark does not perform and consequently combustion cannot be started.

From the above results, in order to properly operate an engine in a wide rotating speed range from starting to a rated speed state after starting it is preferable that the spread angle of fuel spray particles is set to 60° to 90°. Further, it has been found that there is a appropriate angle range in the spread angle of fuel spray particles depending on an operating condition of the engine. For example, it is preferable to produce an optimum fuel injection condition where the spread angle of fuel spray particles is suppressed small, namely nearly 60°, to form a good flammable condition when temperature of the wall surface is low such as at starting time, and the spread angle of fuel spray particles is widened, namely nearly 90°, to disperse the mixture of fuel and air and to decrease a generating amount of soot by suppressing local red-flame burning when combustion is progressed and the temperature of the wall surface becomes high.

Various shapes are proposed as a nozzle shape of an electromagnetic fuel injection valve for producing fuel spray particles. The authors of the present invention recognized that freedom of forming fuel spray was increased by giving a swirl to fuel in the upstream side of a single hole orifice, and obtained the combustion results described above by adjusting the spread angle of fuel spray particles by giving a swirl to fuel in the upstream side of a single hole orifice. In the other hand, in an electromagnetic fuel injection valve of this type, deposits and soot attach onto the injection valve itself. The reason is that temperature of the surface of the fuel injection valve is heated up to 170°C to 200°C by heat directly received from combustion and by heat conduction from the cylinder head, and it is estimated that the top end portion of the fuel injection valve becomes to a further high temperature since it is exposed to the combustion gas.

EP 0 151 793 A1 discloses a fuel injection nozzle for internal combustion engines which are designed for the intermittent direct injection of the fuel into the combustion chamber of the respective cylinder. In order to avoid extreme thermal stresses of the bottom of the nozzle body and to reduce the relating influences of a glowing attachment (for diesel engines), this known fuel injection nozzle has a heat protection device for the nozzle bottom in the form of a protection cap which does not have any influence on the flow of air and fuel. This heat protection cap does not extend over the entire lower part of the nozzle body, but is fixed to a nipple at the lower end of the nozzle body. Between the bottom of the nozzle body and the cap an air gap is provided which is only interrupted in the area of the injection opening 3. Moreover, the face of the cap directed to the combustion chamber is covered with a heat insulating layer 15 of $ZrO_2$ stabilized by $Y_2O_3$. The function of this heat protection cap is to prevent thermal stress in the bottom of the nozzle body and further to intensify the cooling effect of the injected fuel.

DE-OS 2 833 090 discloses a fuel injection valve for the injection of fuel into the intake passage of a combustion engine which comprises a nozzle body on the top end of which a protruding annular top part made of a material with a high thermal conductivity is attached. The function of the top part is to improve the cold start behaviour of the engine. Due to its high thermal conductivity moisture present in the cold engine condenses and freezes preferably at the top part so that condensation near the injection hole is avoided.

Summary of the Invention

In an electromagnetic fuel injection valve capable of directly injecting fuel in a combustion chamber, an object of the invention to solve the aforementioned problems in the prior art is to prevent deposits and soot from attaching and accumulating onto the vicinity of the injection nozzle and to lessen time varying degradation in the performance of the fuel injection valve for, maintaining normal operation of the internal combustion engine.

A further object of the invention is to provide an electromagnetic fuel injection device capable of directly injecting fuel in a combustion chamber which is low in cost and long in life.

A still further object of the invention is to provide an electromagnetic fuel injection valve capable of directly injecting fuel in a combustion chamber which can continue atomizing fuel for a long time.

A further object of the invention is to provide a fuel injection device which can accurately measure a fuel flow rate necessary for the internal engine even when deposits and soot are attached onto the fuel injection device.

A first embodiment of the invention to attain the above objects is an fuel injection device for directly injecting fuel into an combustion chamber of an internal combustion engine in which a fuel passage for passing fuel is formed, wherein the fuel injection device further comprises a valve member for opening and closing the fuel passage, a fuel swirl member for giving swirl to fuel provided in the upstream side of an opening and closing portion of the valve member, a fuel injecting hole member having a through hole for passing fuel provided in the downstream side of the opening and closing portion, and a cover member for covering the fuel injecting hole member having an injecting hole and made of a high thermal conductive material.

It is preferable that the cover member is made of any one of a brass and an aluminum alloy. It is also preferable that the cover member has at least one concave portion at a contact surface side with the fuel injection member. Further, it is preferable that surface temperature near the injecting hole of the cover member is raised to a temperature from 550°C to 1050°C during operation of the internal combustion engine.

A second embodiment of the invention to attain the above objects is an fuel injection device for directly injecting fuel into an combustion chamber of an internal combustion engine in which a fuel passage for passing fuel is formed, wherein the fuel injection device further comprises a valve member for opening and closing the fuel passage, a fuel swirl member for giving swirl to fuel provided in the upstream side of an opening and closing portion of the valve member, a fuel injecting hole member having a through hole for passing fuel provided in the downstream side of the opening and closing portion, and the fuel injection member has a thermal conductance improving member for improving thermal conductance to the side facing the combustion chamber of the internal combustion engine.

It is preferable that the thermal conductance improving member is a member for increasing a surface area thereof by providing projections or depressions. It is also preferable that the thermal conductance improving member is a surface vapor-deposited layer for increasing thermal conductance.

A third embodiment of the invention to attain the above objects is an fuel injection device for directly injecting fuel into an combustion chamber of an internal combustion engine in which a fuel passage for passing fuel is formed, wherein the in-cylinder fuel injection device further comprises a valve member for opening and closing the fuel passage, a fuel swirl member for giving swirl to fuel provided in the upstream side of an opening and closing portion of the valve member, a fuel injecting hole member having a through hole for passing fuel provided in the downstream side of the opening and closing portion, a cover member for covering the fuel injecting hole member having an injecting hole made of a high thermal conductive material, and a thermal convection preventing means for preventing thermal convection from the cover member to the fuel injecting hole member provided between the cover member and the fuel injecting hole member.

In any one of the aforementioned embodiments, it is preferable that the distance in the axial direction of the narrowest portion of the through hole provided in the fuel injecting hole member is within the range of 0.1 to 0.4 mm.

A third embodiment of the invention to attain the above objects is an fuel injection device for directly injecting fuel into an combustion chamber of an internal combustion engine in which a fuel passage for passing fuel is formed, wherein the fuel injection device further comprises a valve member for opening and closing the fuel passage, a fuel swirl member for giving swirl to fuel provided in the upstream side of an opening and closing portion of the valve member, a fuel injecting hole member having a through hole for passing fuel provided in the downstream side of the opening and closing portion, and wherein an amount of fuel to be injected into the internal combustion engine is measured in the opening and closing portion of said valve member.

Further, a fifth embodiment of the invention is an fuel injection device for directly injecting fuel into an combustion chamber of an internal combustion engine in which a fuel passage for passing fuel is formed, wherein the fuel injection device comprises a ball valve member for opening and closing the fuel passage, a fuel swirl member for giving swirl to fuel provided in the upstream side of an opening and closing portion of the ball valve member, a through hole member having a through hole for passing fuel provided in the downstream side of the opening and closing portion, and a cover member for covering the through hole member having a fuel injecting hole in the center thereof, and an opening flow passage area (SV) of the opening and closing portion of the ball valve member and a flow passage area (SO) of the fuel injecting hole formed in the cover member satisfy relationship of SV<SO.

In any one of the above embodiments, it is preferable that the fuel injection device includes an electromagnetic type fuel injection device.

Furthermore, a sixth embodiment of the invention to attain the above objects is an internal combustion engine comprising a cylinder, a cylinder head for covering an upper portion of the cylinder, an intake manifold forming an intake air passage for guiding intake air provided in the cylinder head, an exhaust manifold forming an exhaust gas passage for guiding exhaust gas provided in the cylinder head, an intake valve for choking the intake air passage, an exhaust valve for choking the exhaust gas passage, and a spark plug, wherein a fuel injection device for directly injecting fuel into a combustion chamber formed by the cylinder head and the cylinder is provided, and the fuel injection device comprises a fuel flow passage for passing fuel inside, a valve member for opening and closing the fuel passage, a fuel swirl member for giving swirl to fuel provided in the upstream side of an opening and closing portion of the valve member, a fuel injecting hole member having a through hole for passing fuel provided in the downstream side of the opening and closing portion, and a cover member for covering the fuel injecting hole member and made of either a brass or an aluminum alloy.

Still further, a seventh embodiment of the present invention is an internal combustion engine comprising a cylinder, a cylinder head for covering an upper portion of the cylinder, an intake manifold forming an intake air passage for guiding intake air provided in the cylinder head, an exhaust manifold forming an exhaust gas passage for guiding exhaust gas provided in the cylinder head, an intake valve for choking the intake air passage, an exhaust valve for choking the exhaust gas passage, and a spark plug, wherein a fuel injection device for directly injecting fuel into a combustion chamber formed by the cylinder head and the cylinder is provided, and the fuel injection device comprises a fuel flow passage for passing fuel inside, a valve member for opening and closing the fuel passage, a fuel swirl member for giving swirl to fuel provided in the upstream side of an opening and closing portion of the valve member, a fuel injecting hole member having a through hole for passing fuel provided in the downstream side of the opening and closing portion, and a cover member for covering the fuel injecting hole member and made of either of a brass or an aluminum alloy, and a thermal convection preventing means for preventing thermal convection from the cover member to the fuel injecting hole member provided between the cover member and the fuel injecting hole member.

Further, an eighth embodiment of the present invention is an internal combustion engine comprising a cylinder, a cylinder head for covering an upper portion of the cylinder, an intake manifold forming an intake air passage for guiding intake air provided in the cylinder head, an exhaust manifold forming an exhaust gas passage for guiding exhaust gas provided into the cylinder head, an intake valve for choking the intake air passage, an exhaust valve for choking the exhaust gas passage, and a spark plug, wherein a fuel injection device for directly injecting fuel into a combustion chamber formed by the cylinder head and the cylinder is provided, and the fuel injection device comprises a fuel flow passage for passing fuel inside, a ball valve member for opening and closing the fuel passage, a fuel swirl member for giving swirl to fuel provided in the upstream side of an opening and closing portion of the ball valve member, a through hole member having a through hole for passing fuel provided in the downstream side of the opening and closing portion, and a cover member for covering said through hole member in the center thereof, wherein an opening flow passage area (SV) of the opening and closing portion of the ball valve member and a flow passage area (SO) of the fuel injecting hole formed in the cover member satisfy relationship of SV<SO.

According to the invention, since the cover member including the fuel injecting hole is heated with combustion heat up to the cleaning temperature of deposits, consequently it is possible to prevent deposits and soot changed from the deposits from attaching and accumulating onto the top end portion of the electromagnetic fuel injection valve.

Further, since an amount of fuel is measured by the seat portion of the ball valve, a necessary amount of fuel can be supplied to the internal combustion engine even if deposits and soot are attached onto the exit portion of the electromagnetic fuel injection valve.

Therefore, in an electromagnetic fuel injection valve capable of directly injecting fuel into the combustion chamber, it is possible to prevent deposits and soot from attaching and accumulating onto the surrounding of the injecting hole and to decrease time varying degradation of the performance.

Further, in an internal combustion engine mounting an electromagnetic fuel injection valve capable of directly injecting fuel into the combustion chamber, it is possible to maintain normal operation of the internal combustion engine.

Furthermore, it is possible to provide an electromagnetic fuel injection device capable of directly injecting fuel into the combustion chamber which is low in cost and long in life time.

Still further, it is possible to provide an electromagnetic fuel injection valve capable of directly injecting fuel into the combustion chamber which can continue atomization of fuel for a long time.

Further, it is possible to provide an internal combustion engine mounting an electromagnetic fuel injection valve capable of directly injecting fuel into the combustion chamber which can maintain normal operation.

Although it has been difficult in regard of life-time and reliability to realize an direct fuel injection, it is possible from the above to maintain the injection performance, to optimize the fuel spray shape and to promote atomization, and accordingly to maintain normal operation of an engine for a long time.

Brief Description of the Drawings

FIG.1 is a schematic diagram showing the system construction of an internal combustion engine of in-cylinder fuel injection type in which fuel is directly injected into the combustion chamber in accordance with the present invention.

FIG.2 is an enlarged view of an engine in the system of FIG.1.

FIG.3 is a vertical cross-sectional view showing an embodiment of an in-cylinder fuel injection device in accordance with the present invention.

FIG.4 is a detailed view showing a fuel swirl member taking the cross-sectional plane of the line A-A of FIG.3.

FIG.5 is a detailed cross-sectional view showing a swirl groove of a fuel swirl member.

FIG.6 is an enlarged vertical cross-sectional view showing an embodiment of a valve of an in-cylinder fuel injection device in accordance with the present invention.

FIG.7 is an enlarged vertical view showing an embodiment of a top end portion of an in-cylinder fuel injection device in accordance with the present invention.

FIG.8 is an enlarged vertical view showing another embodiment of a top end portion of an in-cylinder fuel injection device in accordance with the present invention.

FIG.9 is an enlarged vertical view showing a modified embodiment of a top end portion of an in-cylinder fuel injection device in accordance with the present invention.

FIG.10 is an enlarged vertical view showing a further embodiment of a top end portion of an in-cylinder fuel injection device in accordance with the present invention.

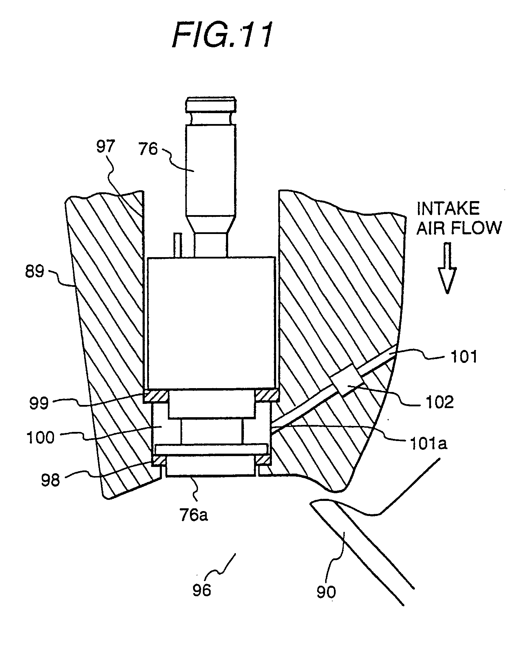

FIG.11 is a view showing a state mounting the in-cylinder fuel injection device in the system of FIG.1.

Detailed Description of the Preferred Embodiments

An embodiment of the invention will be described in detail below, referring to the accompanying drawings.

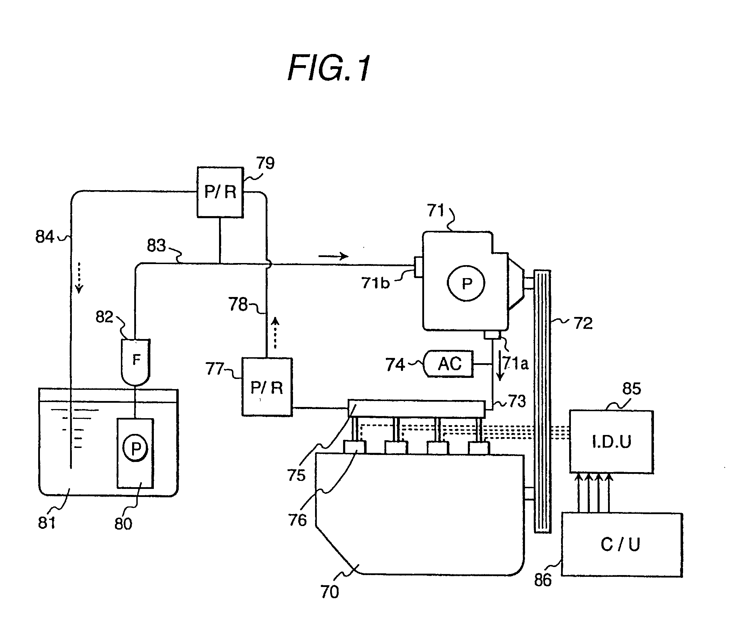

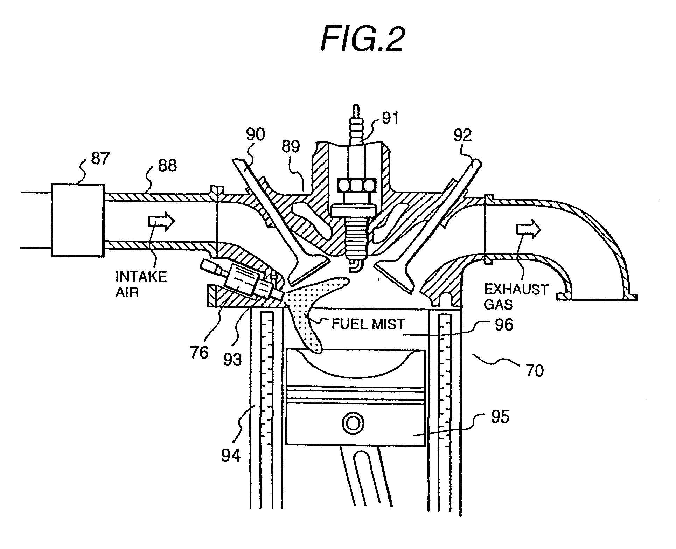

FIG.1 and FIG.2 show the system construction of an internal combustion engine having an embodiment of an electromagnetic fuel injection valve in accordance with the invention which is capable of directly injecting fuel into the combustion chamber. Referring to FIG.1, a four-cylinder four-cycle gasoline engine 70 is connected to a high pressure fuel pump 71 through a belt 72. The high pressure fuel pump 71 is a mechanism to obtain a high pressure fuel by pressurizing fuel by cam driving, for example, by driving a piston to pressurize fuel, and has a delivery port 71a and a suction port 71b. The delivery port 71a and a fuel gallery 75 are connected with a high pressure pipe 73, and an accumulator 74 is arranged in the middle of the high pressure pipe 73. Fuel injection devices 76 to be described later are arrayed and fixed onto the fuel gallery 75.

A high pressure regulator 77 for maintaining pressure of the fuel supplied to the fuel injection devices 76 is arranged in the downstream side of the fuel gallery 75, and the surplus fuel is guided from the fuel gallery 77 to a low pressure regulator 79 through a low pressure pipe 78 and returned to a fuel tank 81 through a returning pipe 84 connected to the low pressure regulator 79. A low pressure fuel pump 80 is installed inside the fuel tank 81 and connected to the suction side of the high pressure fuel pump 71 through a filter 82 and a low pressure pipe 83. An excessive part of the fuel supplied from the low pressure fuel pump 80 to the high pressure fuel pump 71 is guided to the low pressure regulator 79 through a branch pipe provided in the middle of the low pressure pipe 83 and returned to the fuel tank 81 through the returning pipe 84.

Number of the fuel injection devices 76 corresponds to the number of cylinders. A driver circuit 85 for controlling the fuel injection device 76 is connected to an engine control unit 86, and controls a fuel flow rate supplied to each of the fuel injection devices 76 corresponding to various commands from the engine control unit 86. The control unit 86 controls the engine 70 based on operating information such as a intake air flow rate, air temperature, engine water temperature, engine speed and so on.

The internal combustion engine 70 constructed as described above will be described in detail, referring to FIG.2.

A piston 95 reciprocally movable inside the cylinder 94 moves upward and downward in the cylinder 94 according to rotation of the engine shaft, not shown. A cylinder head is attached in the upper portion of the cylinder 94 to form a closed space together with the cylinder 94. In the cylinder head 89 there are formed an intake manifold 88 for introducing external air into the cylinder through an intake air flow rate control unit containing a throttle valve and an exhaust manifold for conducting combustion gas burned inside the cylinder 94.

In the cylinder head 89, there are provided an intake valve 90 in the side of the intake manifold 87, a spark plug 91 in the center and an exhaust valve 92 in the side opposite to the intake valve 90. Dish portions provided in the intake valve 90 and the exhaust valve 92 are extended into the combustion chamber 96. An fuel injection device 76 in accordance with the invention is attached to the cylinder head near the junction portion of the intake manifold 87, and set so that the direction of injecting fuel becomes slightly downward in the combustion chamber 96. In the side portion of the fuel injection device 76, there is provided an intake air introducing passage 93 for supplying a part of intake air to the in-cylinder fuel injection device 76.

Fuel for the internal combustion engine 70 is directly injected into the combustion chamber 96 by the in-cylinder fuel injection device 76 in synchronism with intake air timing. In the combustion chamber 96, the fuel atomized by injection is promoted to be mixed with the air introduced through the intake manifold 88, compressed in the compression stroke and then fired by the spark plug 91 to be burned.

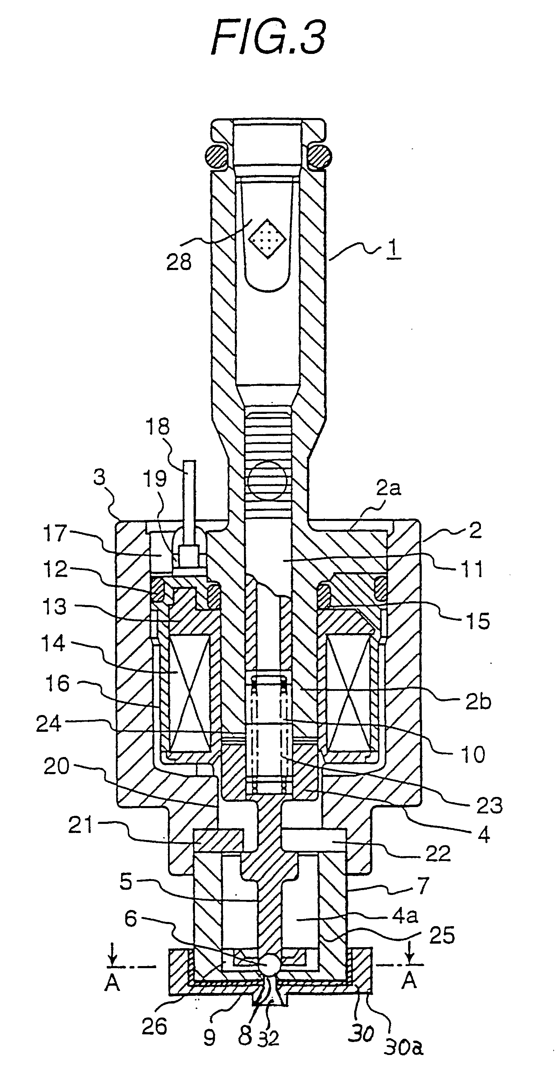

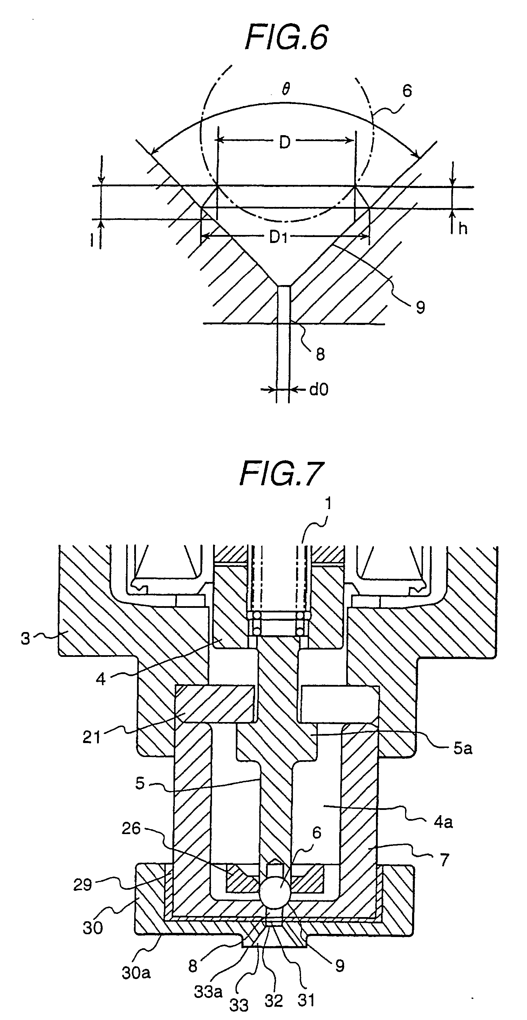

As described above, when the fuel injection device 76 is attached onto the cylinder head 89 to directly inject fuel into the combustion chamber 96, there is an effect to reduce generation of $NO_x$, CO, HC and so on compared to the conventional electromagnetic fuel injection device by leaning fuel, but there occurs a disadvantage in that deposits and soot are apt to attach to the top end portion of the fuel injection device 76 since it is exposed to the combustion gas. A fuel injection device 76 which can reduce attaching of deposits and soot will be described below, referring to FIG.3 and 7.

FIG.3 and 7 show an embodiment of an electromagnetic fuel injection valve composing the fuel injection device 76.

The electromagnetic fuel injection valve 1 controls fuel injection by opening and closing a seat portion formed between a valve ball 6 and a nozzle member 7 corresponding to an ON-OFF signal of duty calculated and obtained in the control unit. A magnetic circuit is composed of a cylindrical yoke 3 with bottom, a core 2 and a plunger 4 facing the core 2 with a gap, and the core 2 is composed of a plug body portion 2a for closing an opening end of the yoke 3 and a column portion 2b extending in the center of the yoke 3. There is formed a hole in the center of the column portion 2b. Inside the hole there is inserted a spring 10 of an elastic member which presses a movable portion 4a composed of the plunger 4 and a valve ball 6 against seat face 9 formed in the upper surface of a nozzle member. The nozzle member 7 has a hole 8 for passing fuel in a position inner side of the contact portion of the ball valve 6.

The upper end portion of the spring 10 is in contact with the lower end portion of a spring adjuster 11 for adjusting opening and closing force of the valve ball, and the spring adjuster 11 is inserted in the center of the core 2. In order to prevent fuel from lowing out through a gap between the core and the yoke 3, an O-ring 12 is provided between the both. A coil 14 for exiting the magnetic circuit is wound around a bobbin 13, and the periphery is molded with a plastic material. A terminal 18 of a coil assembly 16 having the core 2, the coil 3 and the bobbin 13 is inserted into a hole 17 provided in a brim portion of the core 2, and an O-ring 19 is interposed between the terminal 18 and the core 2.

A plunger receiving portion 20 engaging with the plunger 4 is bored near the lower end portion of the yoke 3, and under the plunger receiving portion a nozzle receiving portion 22 having a larger diameter than the plunger receiving portion 20 and engaging with a stopper 21 and a nozzle member 7 is formed in penetrating up to the top end of the yoke.

The movable portion 4a comprises the plunger 4 made of a magnetic material, a rod 5 jointed to the plunger 4 in one end and the valve ball 6 in the other end, and a guide ring 23 fixed to the upper opening portion of the plunger 4 and made of a non-magnetic material. Further, a cylindrical fuel swirl element 26 is inserted into an inner wall of the hollow portion of the nozzle member 7. The guide ring 23 is guided with an inner wall of a hollow portion bored in the top end of the core 2, and the ball 6 is guided with the inner peripheral surface 27 of the fuel swirl element 26. In the nozzle member 7, the seat surface 9 is formed following to the cylindrical fuel swirl element 26, and the opening 8 is provided in the center of the seat surface 9 so that fuel can flow through. A stroke (upward moving amount in the axial direction) of the movable portion 4a is determined by the dimension of the gap between a receiving surface 5a of the neck portion of the rod 5 and the stopper 21. In order to prevent dust or foreign material in the fuel and the piping from entering into the valve seat side, a filter 28 is provided in the inlet portion of the electromagnetic fuel valve.

A cylindrical nozzle cover 30 with bottom is mechanically fixed to the top end periphery of the nozzle member 7 through an insulator 29, as shown in detail in FIG.7. The insulator 29 is formed of a comparatively thin thickness material having a low thermal conductivity, for example, a stainless steel or a nickel alloy. In the other hand, the nozzle cover 30 is formed of a material having a high thermal conductivity such as a brass or an aluminum alloy so as to be easily heated by combustion heat of the engine. A communicating hole 31 and a fuel injecting hole 32 for injecting fuel are provided in the central portion of the insulator 29 and the central portion of the nozzle cover 30, respectively, and the holes are communicated with the opening portion 8 in the upstream side. Further, in the nozzle cover 30, there is provided a taper hole 33 which is extended from the fuel injecting hole 32 and is formed in a cone surface of which the diameter is increased as it goes to the exit side, and the top end surface 33a is slightly projected out of the end surface 30a.

The top end portion of the electromagnetic fuel injection valve 1 formed in such a construction can be easily heated to higher than 550°C . In the other hand, although the electromagnetic fuel injection valve 1 is cooled by fuel contained inside during intake stroke, temperature drop in the top front portion is smaller than that in the prior art since the fuel is closed at the seat portion. That is, in the prior art, the surface temperature of the electromagnetic fuel injection valve is lowered to 130 to 200 °C. However, in the present embodiment, the electromagnetic fuel injection valve can be maintained for a long time at a high temperature in the range from vaporization temperature of deposits of 550°C to burning temperature of combustion temperature of 1050°C. Further, deposits are hardly produced near the seat portion irrespective of combustion stroke, intake stroke and so on since the sheet is cooled by fuel.

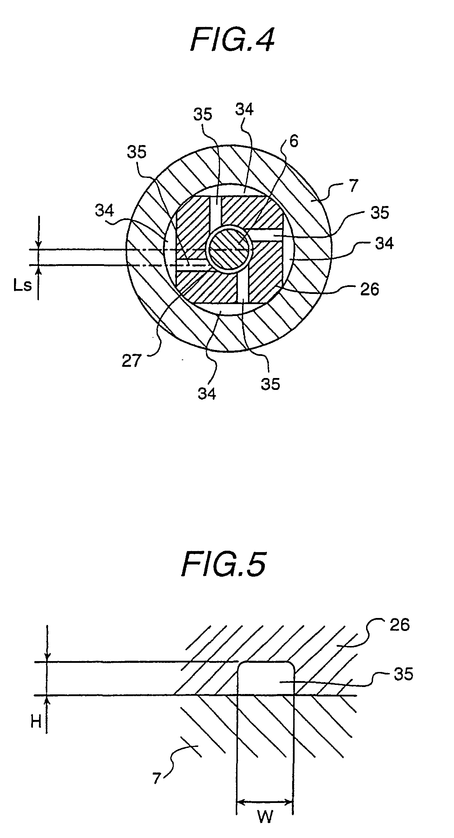

The fuel swirl element 26 and the valve portion will be described in detail below, referring to FIG.4 to FIG.6. The fuel swirl element 26 has four axial direction grooves 34 and four radial direction grooves 35 arranged symmetrically with respect to the axis. In the present embodiment, although the axial direction groove 34 is formed in a D-cut surface, the other shape such as annular passage and so on may be employed and number of passages is not limited to four. The axial direction groove 34 and the radial direction groove 35 are fuel passages for introducing fuel from the upstream side of the valve ball 6, and the fuel passed through the axial direction grooves 34 is introduced eccentrically with respect to the axis by the radial direction grooves 35.Thus, the fuel is swirled and promoted to be atomized when the fuel is injected through the fuel injecting hole 32 provided in the nozzle cover 30.

Swirl intensity (swirl number S) applied by the fuel swirl element 26 is given by the following equation.

$$S = (\text{angular momentum})/(\text{momentum in injection axial direction}$$

$$\times \text{ radius of fuel injection hole})$$

$$= 2 \cdot d_0 \cdot L_s / n \cdot d_s^2 \cdot \cos(\theta/2) \tag{1}$$

where

$d_0$ : diameter of fuel injection hole

$L_s$ : eccentricity of groove

n : number of grooves

θ : angle of valve sheet

$d_s$ : fluid dynamic equivalent diameter which is expressed by the following equation using a groove width W and a groove height H.

$$d_s = 2 \cdot W \cdot H / (W+H) \tag{2}$$

When the swirl number is large, the atomization is promoted and the fuel spray is dispersed. In practical use, the swirl number is preferably 1.2 to 7.0, and more preferably 1.2 to 3.2.

Since the electromagnetic fuel injection valve in the present invention is projected into the combustion chamber, it cannot be avoided that deposits and soot attach onto the exit portion of the fuel injecting hole 8. Therefore, measurement of injecting fuel flow rate in the present invention is performed using the valve portion instead of using the fuel injecting hole in the prior art. That is, letting the ball diameter on the plane of the tangent line of the ball valve 6 and the sheet surface 9 closing the fuel passage be D, the sine of distance between the ball valve 6 and the sheet surface 9 when the movable portion 4a is lifted up from the closing state by 1 (one) be h, and the diameter at a point intersecting the perpendicular line with the sheet surface 9 at that time be $D_1$, the opening passage area SV for the fuel formed in the portion of the ball valve 6 can be expressed as follows.

$$SV = (\pi/2)\,(D_1+D)\{(D_1-D)^2/4 + h^2\}^{1/2} \tag{3}$$

The flow passage area S0 at the fuel injecting hole 8 is expressed as follows.

$$S0 = \pi \cdot d_0{}^2/4 \tag{4}$$

Therefore, a fuel rate at the ball portion can be measured when S0 > SV. Thereby, even if deposits and soot are attached onto the exit portion of the fuel injecting hole 8 to increase the flow resistance in the fuel injecting hole 8, an amount of fuel required for the internal combustion engine can be injected since the fuel is measured at the ball valve portion where there is no effect of the deposits and the soot. It is preferable that the axial length of the narrowest portion of the fuel injecting hole 8 is 0.1 mm to 0.4 mm. By doing so, it is possible to effectively use the swirl applied to the fuel.

Operation of the electromagnetic fuel injection valve 1 constructed as above will be described below. The valve sheet 9 of the electromagnetic fuel injection valve 1 is opened and closed by operating the movable portion 4a corresponding to an electric ON-OFF signal input to the electromagnetic coil 14.By doing so, the fuel injection is controlled. When an electric signal is input to the coil 14, a magnetic circuit is formed by the core 2, the yoke 3 and the plunger 4, the plunger 4 is attracted toward the side of the core 2. As the plunger 4 is moved, the ball valve 6 integrated with the plunger is detached from the sheet surface 9 of the valve sheet of the nozzle member 7 to open the fuel injecting hole 8. Fuel is pressurized and adjusted through the fuel pump, not shown, and the regulator for adjusting fuel pressure, and flows into the inside of the electromagnetic fuel injection valve 1 through the filter 28, and successively flows through the lower passage of the coil assembly 16, the outer peripheral portion of the plunger 4, the gap between the stopper 21 and the rod 5, the axial direction grooves 34 and the radial direction grooves 35 of the fuel swirl element 26, and is supplied to the sheet portion in a form of swirl flow. Then, the fuel is injected into the combustion chamber of the engine through the fuel injecting hole 32 at the time when the valve is opened.

In the present embodiment, since the combustion heat of the engine appropriately heats the nozzle cover 30 made of a high thermal conductive material and raises the temperature of the whole nozzle cover 30 to nearly 550°C, temperature of deposits exceeds its evaporating temperature of self-cleaning temperature. As the result, attaching and accumulating of deposits and soot can be suppressed. Thereby, variation over time in fuel injection from the fuel injecting hole 32 provided in the central portion of the nozzle cover 30 is hardly occurs, and a stable fuel injection can be attained. Further, by employing the taper hole 33 of which the diameter is increased as it goes to the exit side continuing from the fuel injecting hole 32, and the shape of the top end surface 33a is slightly projected out of the end surface 30a of the nozzle cover 30, the heat receiving area is increased.

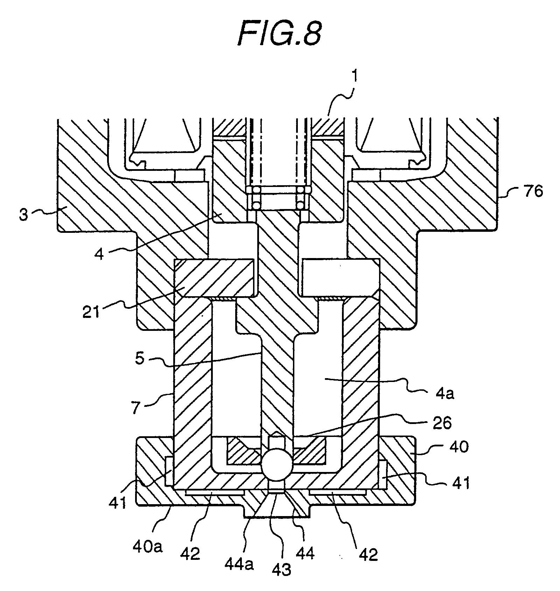

FIG.8 is a vertical cross-sectional view showing another embodiment of a top end portion of an in-cylinder fuel injection device in accordance with the present invention. A different point of the embodiment from the first embodiment described above is that gaps 41, 42 are provided between the nozzle member 7 and the nozzle cover 40. Heat transferred from the nozzle cover 40 to the nozzle member 7 is decreased by the gaps 41, 42. As a result, temperature of the nozzle cover 40 can be easily increased to a self-cleaning temperature of the deposits, and consequently it is possible to suppress deposits from attaching and accumulating onto the fuel injecting hole 43 provided in the central portion of the nozzle cover 40. Further, since the taper hole 44 of which the diameter is increased as it goes to the exit side continuing from the fuel injecting hole 43, and the shape of the top end surface 44a is slightly projected out of the end surface 40a of the nozzle cover 40 as the same as in the above embodiment, the heat receiving area is increased. Furthermore, according to this embodiment, since thermal deformation of the members can be absorbed by the gaps, it is possible to realize a high reliable electromagnetic fuel injection valve capable of preventing deposits and soot from attaching with a simple construction.

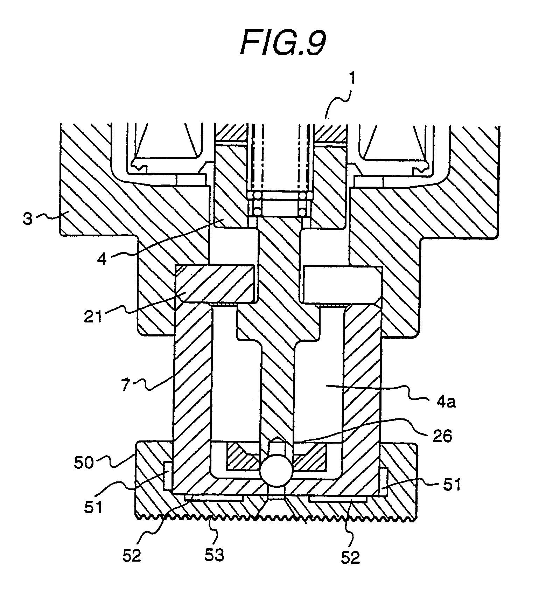

FIG.9 is a vertical cross-sectional view showing a modified embodiment of the top end portion of an fuel injection device of FIG.8. In this modified embodiment, a means for increasing heat receiving area is added to the embodiment sown in FIG.8. That is, the end surface of the nozzle cover 50 in the side of the combustion chamber is formed in a serrate uneven surface 53. In this embodiment, since gaps 51, 52 are also provided between the nozzle member 7 and the nozzle cover 50 as the same as in the embodiment shown in FIG.8, the same effect as in the embodiment of FIG.8 can be obtained.

As for the methods and the means receiving heat other than the aforementioned embodiment and the modified embodiment described above, there are, for example, a method of vapor-depositing metallic particles having a high thermal conductivity onto the surface of the nozzle cover, a method of performing surface treatment so as to roughing the surface of the nozzle cover, and a method of coating the surface of the nozzle cover with a catalytic material having oxidizing action.

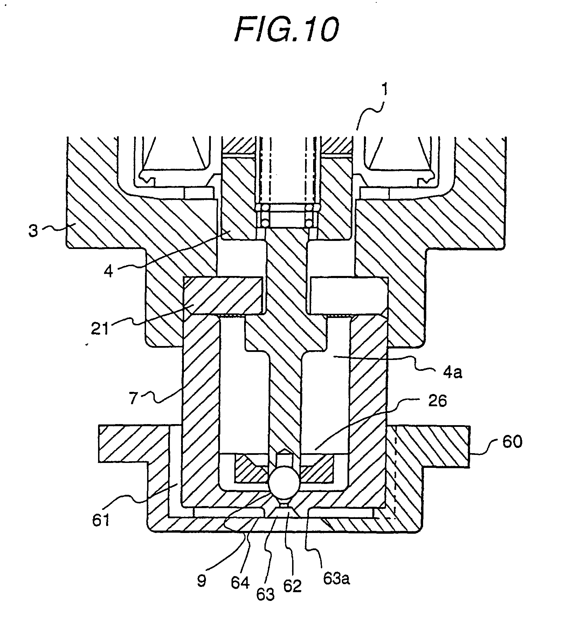

FIG.10 is a vertical cross-sectional view showing a further embodiment of a top end portion of an fuel injection device in accordance with the present invention. A different point of the embodiment from the embodiments described above is that an air-intake passage 61 is provided between the nozzle injecting hole and the nozzle cover 60. In this embodiment, the fuel injecting hole 62 is formed continuously in the downstream side of the valve sheet 9 of the nozzle member 7, and a taper hole 63 of which the inner diameter increases as it goes toward the exit side is formed continuously to the fuel injecting hole 62. The nozzle cover 60 has an air-intake passage 61 for guiding air from the outer periphery to the inner side to allow the air passed through the air-intake passage 61 to flow from the injecting hole 64 into the combustion chamber. When the intake air is flowing into the combustion chamber, the intake air blows off the liquid droplets attached on the surrounding of the end surface downstream of the taper hole 63 which are formed by fuel mist injected form the fuel injecting hole 62. Therefore, it is possible to suppress deposits from attaching and accumulating on the surrounding of the fuel injecting hole. The effect is further increased by employing a nozzle cover 60 made of a high thermal conductive material or having an improved heat receiving effect, as in the embodiments described above.

## Claims

1. Fuel injection device for directly injecting fuel into a combustion chamber (96) of an internal combustion engine (70), comprising

   - a valve member (5, 6) for opening and closing a fuel passage,
   - a nozzle member (7) having a valve seat portion (9) and downstream a fuel passing hole (8) in its top portion,
   - a swirl member (26) disposed in the nozzle member (7) upstream of the opening and closing portion (6) of the valve member and
   - a nozzle cover (30; 40; 50; 60) fixed at the top end of the nozzle member (7),

   **characterized in that**

   - a thermal convection preventing means (29; 41-42; *51-52;* 61) is provided between the nozzle cover (30; 40; 50; 60) and the top portion of the nozzle member (7),
   - said nozzle cover (30; 40; 50; 60) covers the area around the fuel passing hole (8) of the nozzle member (7) and has an injecting hole (32; 43; 62) communicating with the fuel passing hole (8) of the nozzle member and is made or has an outer layer of a high thermal conductive material so that during operation of the engine (70) said nozzle cover (30; 40; 50; 60) is heated up to a self-cleaning temperature by receiving combustion heat.

2. Fuel injection device according to claim 1, **characterized in that** the cover is made of brass or an Al alloy.

3. Fuel injection device according to claim 1 or 2, **characterized in that** the end surface (53) of the nozzle cover (50) is formed as a serrate uneven surface.

4. Fuel injection device according to anyone of the claims 1 to 3, **characterized in that** the nozzle cover (30; 40; 50; 60) has a coating of catalytic material having oxidizing action.

5. Fuel injection device according to anyone of the claims 1 to 4, **characterized in that** a taper hole (33; 44; 63) continuing from the fuel injection hole (32; 43; 62) is provided in the nozzle cover (30; 40) the diameter of which increases to the exit side.

6. Fuel injection device according to anyone of claims 1 to 5, **characterized in that** the shape of the top end surface (33a; 44a) is slightly projecting out of the end face (30a; 40a) of the nozzle cover (30; 40)

7. Fuel injection device according to anyone of claims 1 to 6 **characterized in that** the cylindrical nozzle cover (30) is fixed to the nozzle member (7) through an insulator (29) of a comparatively thin material having a low thermal conductivity, for example a stainless steel or a nickel alloy, said insulator (29) is provided with a communicating hole (31) in its central portion.

8. Fuel injection device according to to anyone of claims 1 to 7, **characterized in that** gaps (41, 42; 1) are provided between the nozzle member (7) and the nozzle cover (40; 60).

9. Fuel injection device according to anyone of the claims 1 to 8, **characterized in that** an air-intake passage (61) is provided in the nozzle cover (60) for guiding air from the outer periphery through the injecting hole (64) in the combustion chamber for blowing clean the taper hole (63) forming the end portion of the injection hole (62).

10. Internal combustion engine comprising a cylinder head (89) for covering the cylinders (94), in which there are provided an intake manifold (88), an exhaust manifold, intake valves (90), exhaust valves (92) and a spark plug (91) for each cylinder, **characterized in that**
a fuel injection device (76) of anyone of claims 1 to 9 is disposed in the cylinder head (89) beside the intake manifold (88) so that the direction of the injected fuel becomes slightly downward in the combustion chamber (96).

**Patentansprüche**

1. Kraftstoffeinspritzvorrichtung zum direkten Einspritzen von Kraftstoff in eine Verbrennungskammer (96) einer Brennkraftmaschine (70) mit

   - einem Ventilteil (5, 6) zum Öffnen und Schließen der Kraftstoffleitung,
   - einem Düsenteil (7) mit einem Ventilsitzabschnitt (9) und einem stromabwärts angeordneten Kraftstoffdurchfluss loch (8) in seinem oberen Abschnitt,
   - einem Drallteil (26), das in dem Düsenteil (7) stromaufwärts des Öffnungs- und Schließabschnitts (6) des Ventilteils (5, 6) angeordnet ist, und
   - eine Düsenabdeckung (30; 40; 50; 60), die an dem oberen Ende des Düsenteils (7) befestigt ist,

     **dadurch gekennzeichnet, dass**

   - ein Mittel zur Verhinderung von Wärmekonvektionen (29; 41, 42; 51, 52; 61) zwischen der Düsenabdeckung (30; 40; 50; 60) und dem oberen Abschnitt des Düsenteils (7) vorgesehen ist, und
   - die Düsenabdeckung (30; 40; 50; 60) die Fläche um das Kraftstoffdurchflussloch (8) des Düsenteils (7) abdeckt und ein Einspritzloch (32; 43; 62) aufweist, das mit dem Kraftstoffdurchflussloch (8) des Düsenteils (7) kommuniziert, und das hergestellt ist oder eine äußere Schicht aus einem Material mit hoher Wärmeleitfähigkeit aufweist, sodass während des Betriebs der Brennkraftmaschine (70) die Düsenabdeckung (30; 40; 50; 60) durch Aufnahme von Verbrennungswärme bis auf eine Selbstreinigungstemperatur aufgeheizt wird.

2. Kraftstoffeinspritzvorrichtung nach Anspruch 1, **dadurch gekennzeichnet, dass** die Abdeckung (30; 40; 50; 60) aus Messing oder einer Aluminiumlegierung hergestellt ist.

3. Kraftstoffeinspritzvorrichtung nach Anspruch 1 oder 2, **dadurch gekennzeichnet, dass** die Endfläche (53) der Düsenabdeckung (50) als gezahnte unebene Oberfläche ausgebildet ist.

4. Kraftstoffeinspritzvorrichtung nach einem beliebigen der Ansprüche 1 bis 3, **dadurch gekennzeichnet, dass** die Düsenabdeckung (30; 40; 50; 60) eine Beschichtung eines katalytischen Materials aufweist, das oxydierende Wirkung aufweist.

5. Kraftstoffeinspritzvorrichtung nach einem beliebigen der Ansprüche 1 bis 4, **dadurch gekennzeichnet, dass** ein kronisch zulaufendes Loch (33; 44; 63), das sich aus dem Kraftstoffeinspritzloch (32; 43; 62) fortsetzt, in der Düsenabdeckung (30; 40) vorgesehen ist, dessen Durchmesser sich zur der Ausgangsseite hin vergrößert.

6. Kraftstoffeinspritzvorrichtung nach einem beliebigen der Ansprüche 1 bis 5, **dadurch gekennzeichnet, dass** die Form der oberen Endfläche (33a, 44a) leicht hervorsteht von der Endfläche (30a; 40a) der Düsenabdeckung (30; 40).

7. Kraftstoffeinspritzvorrichtung nach einem beliebigen der Ansprüche 1 bis 6, **dadurch gekennzeichnet, dass** die zylindrische Düsenabdeckung (30) durch einen Isolator (29) aus einem vergleichsweise dünnen Material mit einer geringen thermischen Leitfähigkeit an dem Düsenteil (7) befestigt ist, wobei der Isolator (29) aus rostfreiem Stahl oder einer Nickellegierung bestehen kann und mit einem kommunizierenden Loch (31) in seinem mittleren Abschnitt versehen ist.

8. Kraftstoffeinspritzvorrichtung nach einem beliebigen der Ansprüche 1 bis 7, **dadurch gekennzeichnet, dass** Lükken (41, 42; 1) zwischen dem Düsenteil (7) und der Düsenabdeckung (40; 60) vorgesehen sind.

9. Kraftstoffeinspritzvorrichtung nach einem beliebigen der Ansprüche 1 bis 8, **dadurch gekennzeichnet, dass** eine Lufteinlassleitung (61) in der Düsenabdeckung (60) vorgesehen ist, um die Luft von der äußeren Umgebung durch das Einspritzloch (64) in die Verbrennungskammer zu leiten zum Sauberblasen des kronisch zulaufenden Lochs (63), das den Endabschnitt des Einspritzlochs (62) bildet.

10. Brennkraftmaschine mit einem Zylinderkopf (89) zum Abdecken der Zylinder (94) der ein Ansaugrohr (88), ein Abgasrohr, Einlassventile (90), Auslassventile (92) und eine Zündkerze (91) für jeden Zylinder aufweist, **dadurch gekennzeichnet, dass** eine Kraftstoffeinspritzvorrichtung (76) gemäß einem beliebigen der Ansprüche 1 bis 9 in dem Zylinderkopf neben dem Ansaugrohr (88) vorgesehen ist, sodass die Richtung des eingespritzten Kraftstoffs leicht nach unten gerichtet ist in die Brennkammer (96).


**Revendications**

1. Dispositif d'injection de carburant pour injecter directement du carburant dans une chambre de combustion (96) d'un moteur à combustion interne (70) comprenant :

   - un élément de soupape (5, 6) pour ouvrir et fermer un passage de carburant,
   - un élément de buse (7) ayant une partie siège de soupape (9) et en aval un orifice de passage du carburant (8) dans sa partie supérieure,
   - un élément tourbillonnaire (26) disposé dans l'élément de buse (7) en amont de la partie ouverture et fermeture (6) de l'élément de soupape et
   - un embout de buse (30 ; 40 ; 50 ; 60) fixé à l'extrémité supérieure de l'élément de buse (7),

   **caractérisé en ce que**

   - un moyen de prévention de la convection thermique (29 ; 41-42 ; 51-52 ; 61) est prévu entre l'embout de buse (30 ; 40 ; 50 ; 60) et la partie supérieure de l'élément de buse (7),
   - ledit embout de buse (30 ; 40 ; 50 ; 60) couvre la zone autour de l'orifice de passage du carburant (8) de l'élément de buse (7) et possède un orifice d'injection (32 ; 43 ; 62) communiquant avec l'orifice de passage du carburant (8) de l'élément de buse et est constitué ou possède une couche externe en un matériau à forte conductivité thermique de sorte que, au cours du fonctionnement du moteur (70), ledit embout de buse (30 ; 40 ; 50 ; 60) soit chauffé à une température d'autonettoyage en recevant la chaleur de combustion.

2. Dispositif d'injection de carburant selon la revendication 1, **caractérisé en ce que** l'embout est fabriqué en laiton ou en un alliage d'aluminium.

3. Dispositif d'injection de carburant selon la revendication 1 ou 2, **caractérisé en ce que** la surface extrême (53) de l'embout de buse (50) prend la forme d'une surface non plane en denture.

4. Dispositif d'injection de carburant selon l'une quelconque des revendications 1 à 3, **caractérisé en ce que** l'embout de buse (30 ; 40 ; 50 ; 60) possède un revêtement de matériau catalytique ayant une action oxydante.

5. Dispositif d'injection de carburant selon l'une quelconque des revendications 1 à 4, **caractérisé en ce qu'**un orifice conique (33 ; 44 ; 63) dans le prolongement de l'orifice d'injection de carburant (32 ; 43 ; 62) est prévu dans l'embout de buse (30 ; 40) dont le diamètre augmente du côté de la sortie.

6. Dispositif d'injection de carburant selon l'une quelconque des revendications 1 à 5, **caractérisé en ce que** la configuration de la surface extrême supérieure (33a ; 44a) est légèrement saillante par rapport à la face extrême (30a ; 40a) de l'embout de la buse (30 ; 40).

7. Dispositif d'injection de carburant selon l'une quelconque des revendications 1 à 6, **caractérisé en ce que** l'embout de buse cylindrique (30) est fixé à l'élément de buse (7) à travers un isolant (29) en un matériau relativement mince ayant une faible conductivité thermique, par exemple un acier inoxydable ou un alliage en nickel, ledit isolant (29) est prévu avec un orifice de communication (31) dans sa portion centrale.

8. Dispositif d'injection de carburant selon l'une quelconque des revendications 1 à 7, **caractérisé en ce que** des espaces (41, 42 ; 1) sont prévus entre l'élément de buse (7) et l'embout de buse (40 ; 60).

9. Dispositif d'injection de carburant selon l'une quelconque des revendications 1 à 8, **caractérisé en ce qu'**un passage d'admission d'air (61) est prévu dans l'embout de buse (60) pour guider l'air provenant de la périphérie externe à travers l'orifice d'injection (64) dans la chambre de combustion pour nettoyer par soufflage l'orifice conique (63) formant la portion extrême de l'orifice d'injection (62).

10. Moteur à combustion interne comprenant une tête de cylindre (89) pour couvrir les cylindres (94) dans lesquels on a prévu un collecteur d'admission (88), un collecteur d'échappement, des soupapes d'admission (90), des soupapes d'échappement (92) et une bougie (91) pour chaque cylindre,
**caractérisé en ce que**
un dispositif d'injection de carburant (76) de l'une quelconque des revendications 1 à 9 est disposé dans la tête de cylindre (89) à côté du collecteur d'admission (88) de sorte que la direction du carburant injecté soit dirigée légèrement vers le bas dans la chambre de combustion (96).

FIG.1

*FIG.2*

# FIG.3

## FIG.4

## FIG.5

## FIG.6

## FIG.7

# FIG.8

*FIG.9*

# FIG.10

# FIG.11

INTAKE
AIR FLOW